Europäisches Patentamt

(19) European Patent Office (11) Publication number: **0 268 519**

Office européen des brevets **B1**

(12) **EUROPEAN PATENT SPECIFICATION**

(45) Date of publication of the patent specification: (51) Int. Cl.⁵: **G01P 5/22**
27.06.90

(21) Application number: **87402454.0**

(22) Date of filing: **30.10.87**

(54) **System of processing signals drowned in a noise and its application to fringe laser velocimetry.**

(30) Priority: **31.10.86 FR 8615250**

(43) Date of publication of application:
**25.05.88 Bulletin 88/21**

(45) Publication of the grant of the patent:
**27.06.90 Bulletin 90/26**

(84) Designated Contracting States:
**BE DE GB IT NL**

(56) References cited:
**EP-A- 0 097 041**
**FR-A- 2 303 296**

**THIRD INTERNATIONAL SYMPOSIUM ON APPLICATIONS OF LASER ANEMOMETRY TO FLUID MECHANICS, Lisbon, 7th-9th July 1986, pages 3.1.1 - 3.6.6; J.F. MEYERS et al.: "Frequency domain laser velocimeter signal processor"**
**THE RADIO AND ELECTRONIC ENGINEER, vol. 43, no. 6, June 1973, pages 363-368, London, GB; A.M. HAYES et al.: "Correlator design for flow measurement"**

(73) Proprietor: **OFFICE NATIONAL D'ETUDES ET DE RECHERCHES AEROSPATIALES(O.N.E.R.A.), 29, avenue de la Division Leclerc, F-92320 Chatillon (Hauts de Seine)(FR)**

(72) Inventor: **Appel, Jean, 9, rue Auguste Comte, F-92170 Vanves(FR)**

(74) Representative: **Martinet & Lapoux, 62, rue des Mathurins, F-75008 Paris(FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

System of processing signals drowned in a noise and its application to fringe laser velocimetry

BACKGROUND OF THE INVENTION

1. Field of the Invention

This invention relates to a device whereby a noise can be extracted from short duration periodic signals succeeding each other at random intervals. The device can be applied to fringe laser velocimetry in order to measure the instantaneous rate of flow of gases or liquids, using particles carried by the fluid as tracer, these particles having a dimension of around 1 micron and being most often introduced artificially.

More generally speaking the invention concerns a system of processing signals whereby it is possible to detect and analyse in frequency, in real time, all short duration periodic signals drowned in a noise and whose instants of appearance are unforeseeable.

In order to measure the flow rate of a fluid by fringe laser velocimetry, a network of interference fringes is formed at a given point in the flow referred to as "test volume", via the intersection of two laser beams. A particle passing in the test volume encounters successively the clear and obscure parts of the fringes and diffuses light in all directions.

A photomultiplier aiming at the test volume therefore receives a flow modulated sinusoidally to the frequency:

$$(1) \quad f = \frac{v}{i}$$

in which v is the speed of the particle and i the pitch between fringes.

This modulated signal has a gaussian envelope significant of the distribution of the intensity of the luminous flux in the test volume. After high-pass filtering, the signal collected by the photomultiplier can be expressed in the following form:

(2) $s(t) = a.\cos \omega t.\exp(-t^2/2\ \sigma^2)$

$$\text{with} \quad \omega = \frac{2\pi v}{i}$$

and $\sigma$ : standard deviation of the gaussian envelope.

A more or less intensive noise b(t) is generally superposed on the signal s(t) according to the position of the test volume in relation to the walls guiding the flow, and according to the way in which the photomultiplier receives the luminous flux (prior or back diffusion, ...).

DESCRIPTION OF THE PRIOR ART

There are two main classes of means of speed measurement producing results which are substantially different:

1. The means of testing providing globally, over a large number of particles, a statistical estimate of the average speed and its standard deviation characterizing the turbulence;

2. The means of testing providing the instantaneous speed of each particle with possibly the corresponding dating.These second means have obviously a higher performance because, apart from the mean speed and its standard deviation that can always be calculated, it provides access to other values (higher order moments, turbulence spectrum, etc., ...). Moreover only these means provide access to the instantaneous speed vector in bi or tri-dimensional mode. The system covered by the invention belongs to this latter category of means of analysis.

In the systems globally analysing a sample of N particles, those which analyse the signal provided by the photomultiplier analogically, frequency band by frequency band, can be singled out.

On the spectrum thus obtained the white noise results in a continuous signal whereas the useful signal results in a more or less wide peak according to the energy of the flow turbulence. This method, sturdy versus the noise, is not very fast or accurate.

A digital spectral analysis can also be made, the analysis is made digitally either via a band-pass scanning filter, or via a battery of filters in-parallel. The system becomes more accurate but remains slow (if only one filter is used), or costly (in the event of the filter battery).

A digital correlator can be used in real time to extract from the "useful signal plus white noise" sum, the periodic useful part. In fact, as the white noise only affects the first coefficient of the signal autocorrelation function, it is simply necessary to acquire the $C_n\ 0$ correlation to extract the signal from the noise.

Average speed and turbulence intensity can be deduced directly from the autocorrelation function, but it is easier to firstly make the Fourier transform and determine these values from the power spectrum. The correlator commercialized by the firm MALVERN uses this principle, digitizing the signal on one bit only.

To measure the instantaneous speeds it is necessary to detect previously, in the signal, the instance corresponding to the particle passage across the test volume. The different systems in the second category can be therefore singled out, firstly, by the way in which this detection is made and secondly, by the method of estimating the frequency of the useful signal, hence the speed of the particles.

The method most currently used in laser velocimetry of this type is the so-called "counting" method. The useful signal is detected by comparing its amplitude to a threshold and the frequency is measured by counting a high speed clock on a certain number of periods of the frequency to be measured.

This method is relatively accurate (although limited by the maximum frequency of the counting clock: 500 MHz) but it no longer operates when the noise level rises. In fact the passages of the signal across 0 are no longer significant.

A method via spectral analysis on activation is known in the prior art and is the subject of Dieter Pallek's article on the DFVLR "Fast digital data acquisition and analysis of LDA signals by means of a transient recorder and an array processor" published in the ICIASF'85 Record. When the amplitude of the signal exceeds a certain threshold, a section of the signal is acquired, in pre-activated mode, whose duration corresponds approximately to the passage time of the particle across the test volume. Then a Fourier transform of the signal is made and its power spectrum calculated via a parallel computer called "array processor".

This method is relatively sturdy versus the noise but all the same requires that the presence of the useful signal results in an increase of the global level detectable via a threshold. This method is therefore difficult to apply when the signal/noise ratio is much reduced. Moreover the system is not very fast and is relatively costly.

Another method of spectral analysis, by activation on the energy of the signal to be analysed by filtering, is the subject of James F.Meyer's - of NASA - article "Frequency domain laser velocimeter signal processor," published in the Proceedings of the "Third International Symposium on Applications of Laser Anemometry to Fluid Mechanic". It has a higher performance because, instead of detecting the signal via a threshold on the amplitude (sensitive to the noise), it detects it by a threshold on the energy. The system calculates the energy of the signal continuously and on a constant time sector T. If this energy exceeds a certain threshold, then it is agreed that the passage of a particle has been detected. The corresponding signal is stored then applied to the input of a band-pass filter battery to determine the frequency.

To calculate the energy, the signal is digitized on one bit, for the filtering it is digitized on two bits.

As the number of pass-band filters is not very high, one acts iteratively on the sampling frequency to obtain a maximum energy on the central filter. A certain number of particles of the same speed are therefore required to converge.

The MEYERS method described above offers two drawbacks:

a. The "thresholding" applied to the energy contains in a time sector T of the signal is better than that applied to the amplitude. Nevertheless it assumes that the         energy of the noise on this same sector is relatively constant, which is not necessarily the case. Moreover, in the presence of a strong noise, the difference between the energy of the noise and that of the "noise plus signal" can be slight which makes "thresholding" delicate.

b. The system requires a period of apprenticeship to adapt the sampling rate to the frequency of the signal so as to adjust the filter's response curve to this same frequency.

Which means that the measurement is not strictly instantaneous.

SUMMARY OF THE INVENTION

The new process proposed remedies these two drawbacks in the event of it being possible to assume the noise as white:
- the detection criterion is no longer a comparison to a threshold on the energy but to a threshold on the autocorrelation function of the signal, which offers nonnull values for delays different from 0 whereas that of the noise is null for these same conditions; the estimate of the frequency is made by discrete Fourier transform (DFT) scanning a restricted frequency range estimated roughly from the first passage across 0 of the autocorrelation function. The speed of each particle can therefore be calculated.

THEORETICAL JUSTIFICATION

A means of detecting a periodical signal s(t) drowned in white noise is to perform the autocorrelation function

$$C(\tau) = \int_{-\infty}^{+\infty} s(t).s(t - \tau)dt$$

limited in practice to

$$C_T(\tau) = \int_{t_0}^{t_0+T} s(t).s(t - \tau)dt$$

owing to the fact that the analysis duration is limited to T.

In the case in question s(t) can, in an initial approximation, be modelized by:

$s(t) = b(t) + a.\cos \omega t.\exp (-t^2/2\sigma^2)$

for a particle with b(t): white noise

$\omega$: angular frequency of the useful signal

$\exp (-t^2/2\sigma^2)$: gaussian envelope or error function of the useful signal.

In fact, s(t) corresponds to the output of the photomultiplier after high-pass filtering.

The autocorrelation function of s(t) is stated:

$$C(\tau) = k\,\delta(0) + a\sigma\frac{\sqrt{\pi}}{2} . \exp (-\tau^2/2(\sqrt{2}\sigma)^2).\cos \omega\tau$$

$\delta(o)$ is a Dirac pulse centered at the origin (autocorrelation of the noise). It can be seen here that $C(\tau)$ has a periodic component $\cos \omega\tau$ which has the same angular frequency as that of s(t). On $C(\tau)$, the measurement of $\omega$ will be more accurate because the whole noise is reduced to the origin in the form of a Dirac pulse.

This method is already used (see the paragraph covering analysis by correlation) but integrating in the calculation of $C(\tau)$, a great number of "bursts" (one "burst" = signal corresponding to the passage of a particle). The Fourier transform of $C(\tau)$ which is the power spectrum of s(t), then provides the distribution of speeds in terms of probability density. But all notion of instantaneous speed and simultaneity (in bi and tri-dimensional) is lost.

The aim of the invention is to use the correlation method but modifying it so as to be able to store the instantaneous speeds.

To do so, an autocorrelation function is calculated sliding with the time and whose integration duration T is constant and of the order of magnitude of the duration of a "burst". We shall take for example $T = 2\sigma_M$ with $\sigma_M$ mean standard deviation of the gaussian envelope of the "burst".

$$I.e., \quad (3) \quad C_T(t,\tau) = \int_{t-T}^{t} s(t).s(t-\tau)dt$$

if $t_0$ designates an arbitrary origin of times, prior to the start of the measurement we obtain:

$$C_T(t,\tau) = \int_{t_0}^{t} s(t).s(t-\tau)dt - \int_{t_0}^{t-T} s(t).s(t-\tau)dt$$
$$= \int_{t_0}^{t} s(t).s(t-\tau)dt - \int_{t_0+T}^{t} s(t-T).s(t-T-\tau)dt$$

and as it is assumed that $s(t-T) = 0$ with $t_0 < t < t_0+T$ (which means that the signal and noise are null for the time preceding the instant $t = 0$), then,

$$(4) \quad C_T(t,\tau) = \int_{t_0}^{t} \left[s(t).s(t-\tau) - s(t-T).s(t-T-\tau)\right]$$

When sampled this relation becomes:

$$(5) \quad C_n(i,k) = \sum_{i=0}^{i} (x_i \cdot x_{i-k} - x_{i-n} \cdot x_{i-n-k}).$$

$C_n(i,k)$ is the present correlation coefficient for a delay $k\Delta t$, calculated on a signall time sector of duration $n\Delta t$ the origin of this sector being $i-n\Delta t$ with $x_i \equiv 0$ for $i < 0$.

Generally speaking k is varied from l to n. The first n correlation coefficients are therefore available (C(o) is not calculated).

To make the corresponding calculations, the relation (5) shows that it is necessary to dispose of $x_i$, last value sampled, and of the 2n previous samples.

## BRIEF DESCRIPTION OF THE DRAWINGS

The invention will now be described in detail in relation to the drawings appended in which:

- Figure 1 shows a fringe laser velocimetry device complying with the invention;
- Figure 2 illustrates the principle of sliding autocorrelation:
- Figure 3 shows the sliding autocorrelator;
- Figure 4 shows an embodiment of the sliding autocorrelator in Figure 3;
- Figure 5 provides an example of a burst detection criterion implying three correlation coefficients;
- Figure 6 shows a device determining the frequency of a "burst";
- Figure 7 shows another sliding correlator;
- Figure 8 shows the paralleling of several correlators in order to switch from a correlation of 4x1 bit to a correlation of 4x2 bits;
- Figure 9 shows the serializing of two correlators to double the number of correlation coefficients.

## DETAILED DESCRIPTION

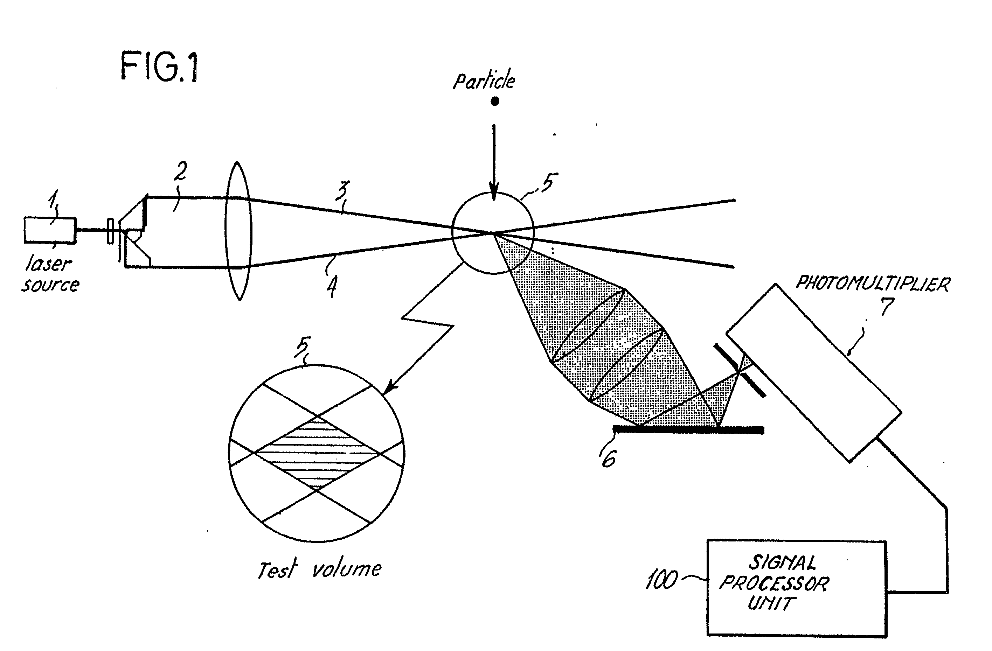

Referring to Figure 1 the fringe laser velocimeter includes a laser source 1 producing a coherent beam 2. This beam is divided into two beams 3 and 4 which are placed in interference in the test volume 5. The luminous flux emitted by the test volume 5 is received on a mirror 6 which projects it on to a photomultiplier 7. The output of the photomultiplier 7 is coupled to a signal processor unit 100. The invention concerns the structure of this processor unit.

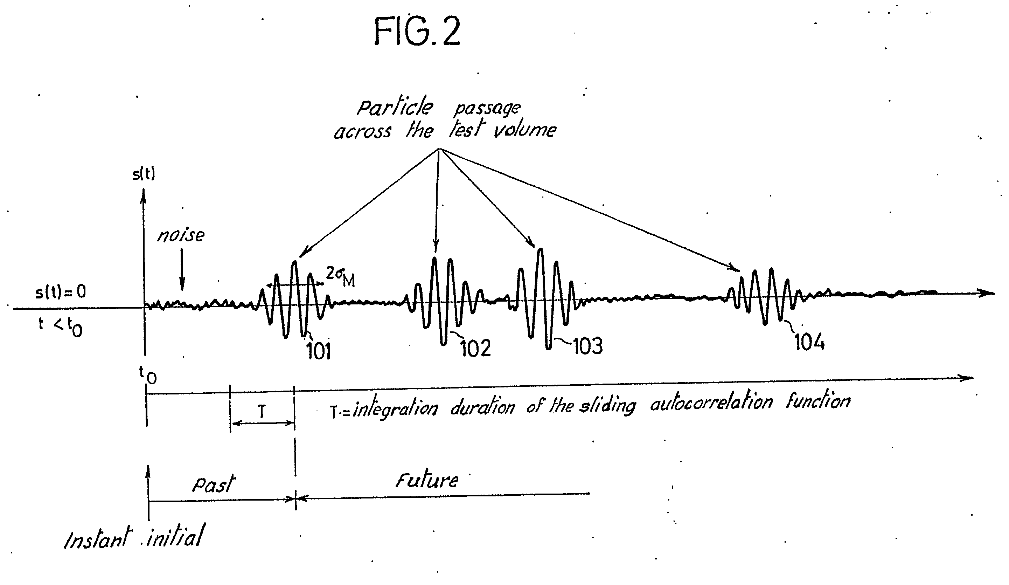

Figure 2 shows four "bursts" 101 to 104. The integration duration T runs from (t-T) to t and finishes at the present instant t.

The duration T can be stated

$(t_0 - t) - [t_0 - (t - T)]$

or:

$(t_0 - t) - [(t_0 + T) - t]$

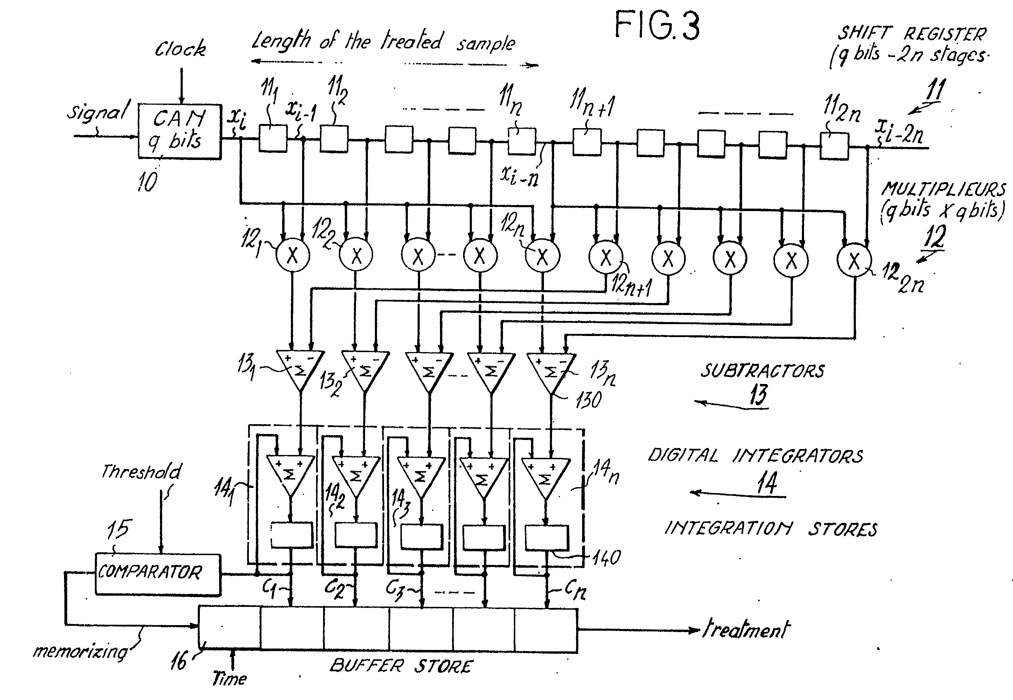

Figure 3 shows in block diagram form, a correlation to calculate the relation (5).

An analog/digital converter 10 samples and digitizes the signal on q bits. I.e., $x_i$ is output of the instant $i \Delta t$ ($\Delta t$ sampling period). A shift register 11 initially resets and containing 2n stages $11_1$ to $11_{2n}$ stores all the delayed samples.

n multipliers $12_1$ to $12_n$ calculate the products $x_i \cdot x_{i-k}$ for k=1,n. ($x_i$: present sample; $x_{i-k}$ delayed sample of k = 1, n sampling periods.)

The next n multipliers $12_{n+1}$ to $12_{2n}$ calculate the products $x_{i-n} \cdot x_{i-n-k}$ for k = 1,n (($x_{i-n}$ present sample delayed by $n\Delta t$, $x_{i-n-k}$: delayed sample of (n+k) sampling periods). n subtractors $13_1$ to $13_n$ calculate $(x_i \cdot x_{i-k}) - (x_{i-n} \cdot x_{i-n-k})$ for k = 1, n.

Output 130 of each of these subtractors $13_1$ to $13_n$ is integrated digitally by integrators $14_1$ to $14_n$. Output 140 of the integrators provides, in real time, the estimate of the coefficients $C_1$ to $C_n$ of the autocorrelation function sliding on duration $T = n.\Delta t$.

The originality of the autocorrelator in Figure 3 is the existence of the stages $11_{n+1}$ to $11_{2n}$ of register 11, of the multipliers $12_{n+1}$ to $12_{2n}$ and subtractors $13_1$ to $13_n$.

The criterion detecting the presence of a "burst" is the following:

If the noise is white and the signal/noise ratio high it is sufficient, to detec he passage of a particle, to choose one of the correlation coefficients $C_n$ 0 so that $n \geq 1$, aware that almost all the noise is contained in $C_o$. Generalling speaking, $C_1$ will be chosen, to compare it in a comparator 15 to a preprogrammed threshold S. If $C_1 > S$, comparator 15 will activate the memorization in store 16 of the n correlation coefficients. One will then wait for $C_1$ to drop below the threshold to reset the system.

In practice, in cases where the noise is very high is compared to the signal, its autocorrelation function calculated on a limited time, can no longer be assimiliated to a Dirac pulse centered on the origin and will offer a residual "noise".

EP 0 268 519 B1

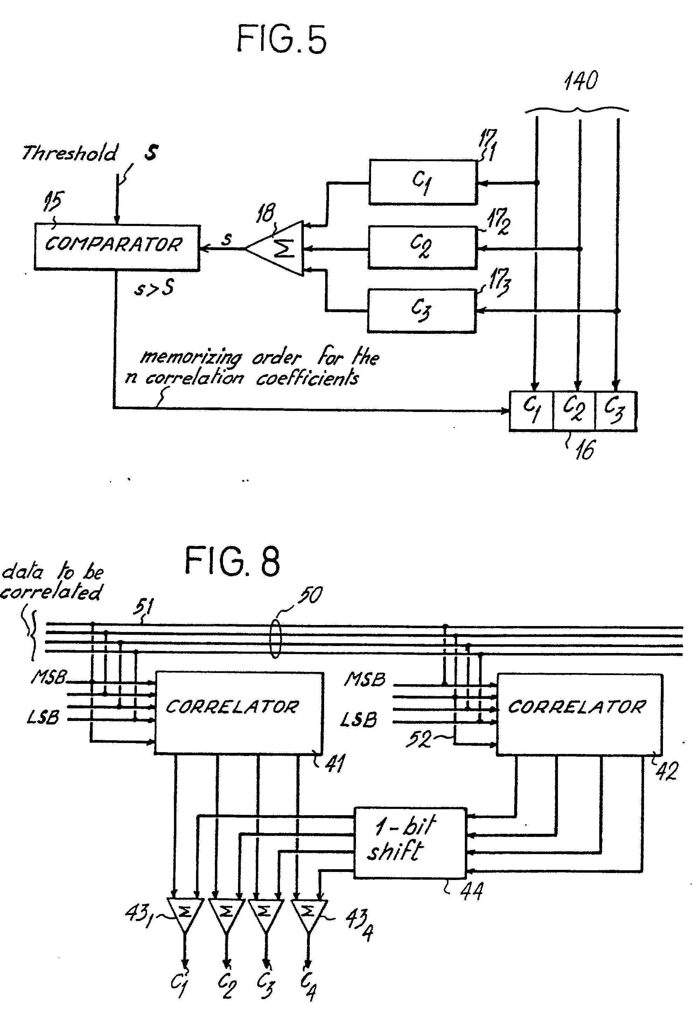

To increase the signal/noise ratio on detecting the "burst", it is then possible to compare to threshold S not simply $C_1$, but the sum of the modules of the first coefficients (for example $|C_1| + |C_2|$ or $|C_2| + |C_3|$ or still again $|C_1| + |C_2| + |C_3|$). Figure 5 shows again the out-leads 140 from integrators $14_1$ to $14_3$ and the correlation coefficients storage registers 16. Leads 140 are connected to amplitude detectors $17_1$, $17_2$, $17_3$ and the outputs of these detectors are connected to an addition circuit 18 itself connected to comparator 15. The comparator controls read of register 16 as in Figure 3.

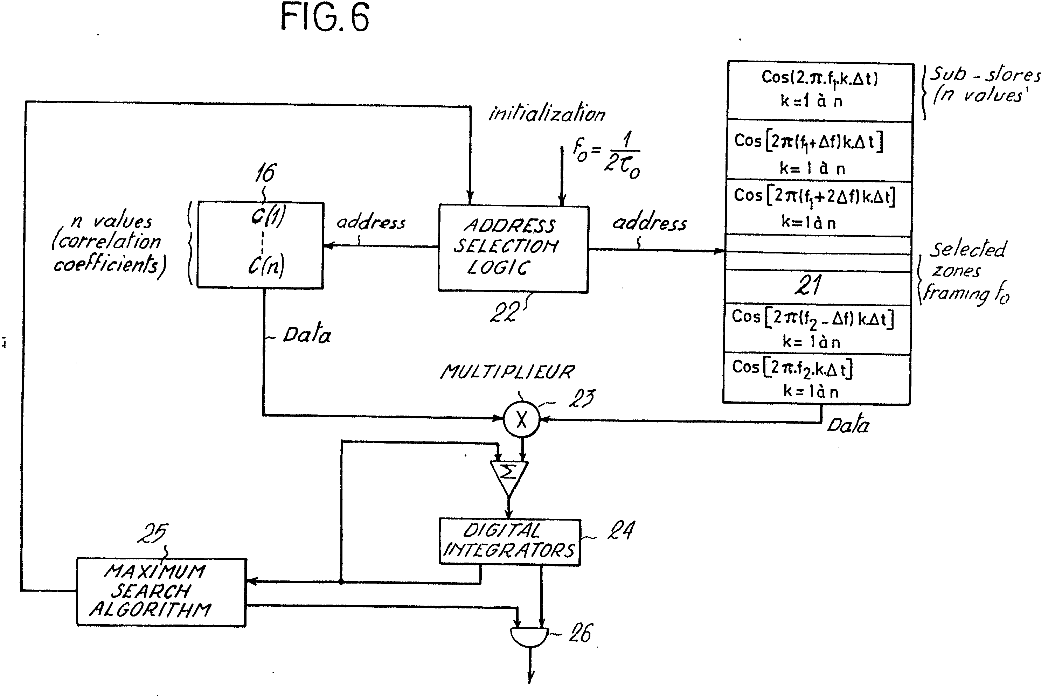

The estimate of the frequency from n correlation coefficients is made as follows (Figure 6):

The time $\gamma_0$ after which the correlation function passes the first time across 0 is measured. A rough estimate of the frequency required is $f_0 = 1/2\tau_0$ (this estimate can also be made by using several passages across zero of $C(\gamma)$. The maximum of the function is sought:

$$P(f) = \sum_{k=1}^{n} C(k) . \cos 2 \pi f k \Delta t$$

by a scanning on f around $f_0$ and with the frequential pitch required ($f = f_0 \pm m\Delta f$).

The system described in Figure 6 makes this estimate rapidly.

The n correlation coefficients $C_1$ to $C_n$ are memorized in store 16 (figure 3). A table 21 contains the values of the $\cos 2\pi fk\Delta t$ for k varying from of 1 to n and f varying from $f_1$ to $f_2$ by a pitch of $\Delta f$ ($f_1$ and $f_2$ are the limit frequencies corresponding to the limit speed contained in the flow and $\Delta f$ the frequential resolution to be obtained). Let us call "sub-store" a zone of n values for which f is constant.

A table 21 address selection logic 22 initialized by $f_0 - 1/2 \tau_0$ will select a certain number of sub-stores whose frequencies frame $f_0$.

For each of these sub-stores, the integral product will be made

$$\sum_{k=1}^{n} C(k) . \cos(2\pi . f . k . \Delta t)$$

via a multiplier 23 in digital integrator 24.

The maximum of P(f) will correspond to the value f sought. The duration of this search obviously depends on the frequential pitch adopted but, with a frequency resolution of around $10^{-3}$, a real time rate of around a few kHz is possible.

Digital integrator 24 is connected to a maximum search circuit 25 which is itself connected to the address selection logic 22 and to a gate 26 on output whereof the frequency sought is found.

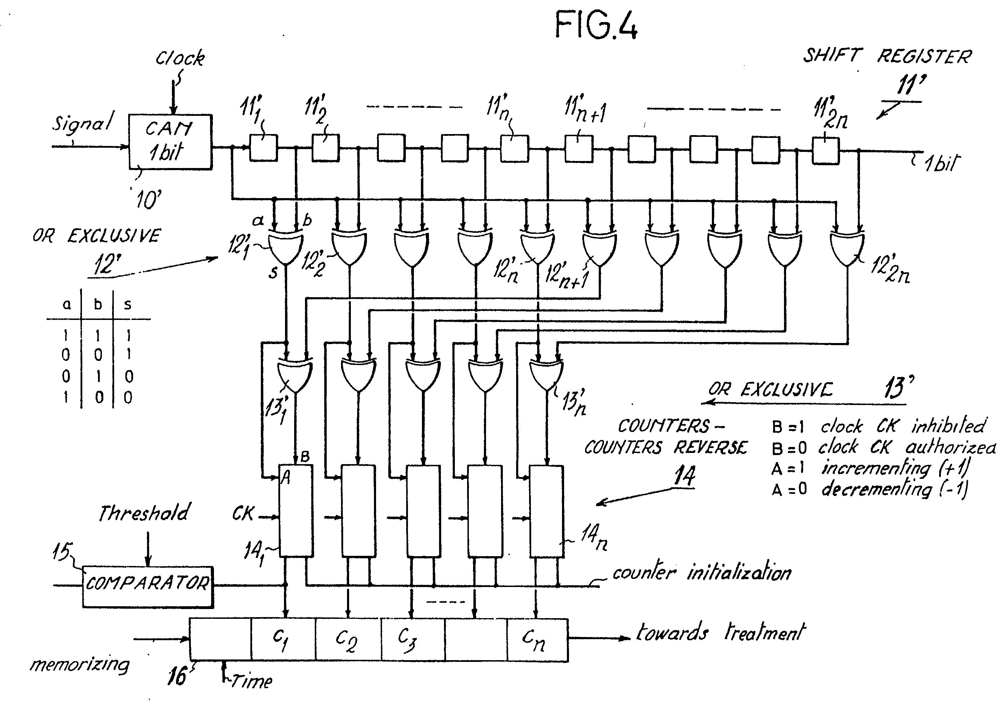

The correlator in Figure 4 corresponds to the case in which it suffices, to estimate a correlation function, to digitize the signal s(t) on one bit, i.e., for example:

1 if s(t) > 0

O if s(t) < 0.

The analog/digital converter 10' is a one bit converter. Register 11' is a one bit shift register. Multipliers 12 are replaced by simple "OR exclusive" circuits 12'. Subtractors 13 are also replaced by "OR exclusive" circuits 13'. The digital integrators 14 are counters - reverse counters in Figure 4. These counters - reverse counters are latched by the subtractor OR exclusive and driven by an input receiving the signal delivered by                    see Figure 4).

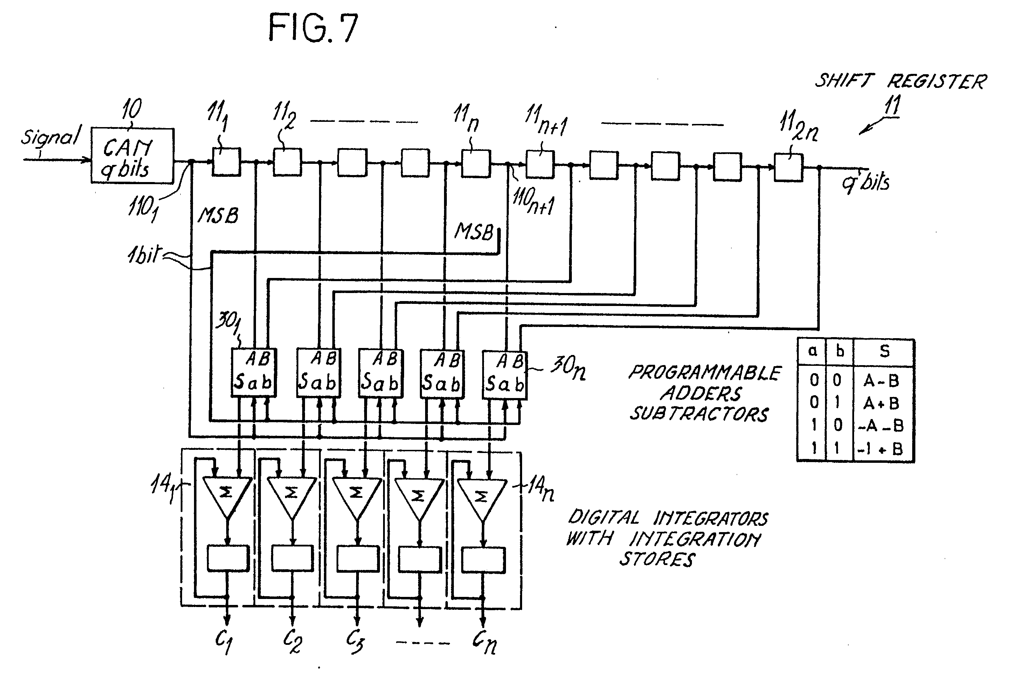

Figure 7 shows a q x 1 bit correlator.

Signal s(t) is digitized on q bits and the samples are stored in the different elements $11_1$ to $11_{2n}$ of the shift register 11. The bit with which the q bits of the signal samples are correlated, is the most significant bit (sign) extracted from input $110_1$ of store $11_1$ and input $110_{n+1}$ of store $11_{n+1}$.

The quantity to be calculated is

$$\sum_{i=1}^{n} (S_i \, x_{i-k} - S_{i-n} \, x_{i-n-k})$$

where $S_i$ and $S_{i-n}$ are the sign bits on inputs $110_1$ and $110_{n+1}$. According to the values of $S_i$ and $S_{i-n}$ it will therefore be necessary to calculate:

$X_{i-k} - X_{i-n-k}$

$X_{i-k} + X_{i-n-k}$

$-X_{i-k} - X_{i-n-k}$

$-X_{i-k} + X_{i-n-k}$

The adders - subtractors $30_1$ to $30_n$ are set on addition or subtraction according to the sign of the sign bits $S_i$ and $S_{i-n}$. The outputs of these adders - subtractors are connected to the inputs of digtial integrators $14_1$ to $14_n$ as in the case in Figure 3.

The adders - subtractors truth table is provided in Figure 7.

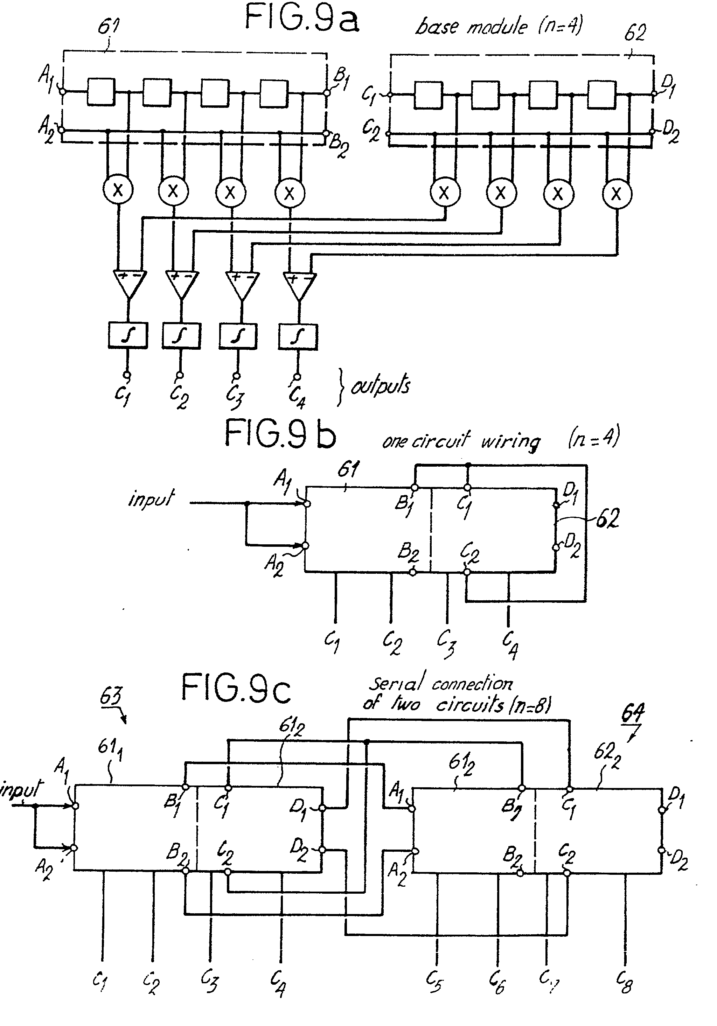

Figure 8 shows two correlators 41 and 42 working in parallel at q x 1 bit with q = 4.

6

The single bit correlated in correlator 41 is taken on lead 51 corresponding to the most significant bit of line 50 transmitting the q bits and the single bit correlated in correlator 42 is taken on lead 52 corresponding to the bit of significance immediately below, of this line. The outputs of correlater 42 are added with the outputs of correlator 41 in adders 43 after having been shifted by one bit in circuit 44; this shift corresponding to a multiplication by 2 of the values of the output words of correlator 42. This system whereby a correlation of qx2 bits can be obtained with two qx1 bit correlators can be expended to q x p bits by parallelling p correlators at q x 1 bit ($p \leq_{\alpha\mu\rho}^{''} q$).

In one embodiment of the invention the delayed samples are stored in two shift registers 61, 62 with n stages of q bits (Figure 9a for n = 4) interconnected according to the diagram in Figure 9b to obtain n autocorrelation coefficients ($C_1$, $C_2$, $C_3$, $C_4$ for n = 4).

Figure 9c shows two correlators 63, 64 with four autocorrelation coefficients $C_1$, $C_2$, $C_3$, $C_4$ and $C_5$, $C_6$, $C_7$, $C_8$, working in series to double the number of autocorrelation coefficients calculated. Each correlator contains two shift registers $61_1$, $62_1$ and $61_2$, $62_2$; the first two registers $61_1$, $61_2$ and the second two registers $62_1$, $62_2$ being grouped and connected in series to form two double capacity registers, storing respectively the delayed samples of $\Delta t$, $2\Delta t$, ..., $n\Delta t$ and those delayed, from $(n+1)\Delta t$, $(n+2)\Delta t$, ..., $2n\Delta t$. With this system correlation units are provided supplying px4 correlation coefficients, by a serial connection of p correlators.

## Claims

1 - Apparatus for detecting the instant of appearance and determining the frequency of a periodic signal embedded in a noise, including real time means for calculating the autocorrelation function of this signal and deducing its frequency from the value of the autocorrelation function coefficients, said apparatus comprising :

an analog to digital converter periodically transforming the signal into samples of q bits.

means for delaying said samples by a predetermined time interval $\Delta t$ and multiples thereof, said delaying means including a first delaying circuit group of n delaying circuits for delaying the said samples by $\Delta t$, $2\Delta t$...$n\Delta t$ and a second delaying circuit group of n delaying circuits for delaying the said samples by $(n + 1)\Delta t + 2)\Delta t$, ..., $2n\Delta t$ ;

multiplying means including a first multiplying circuit group of n multiplying circuits for multiplying the samples provided by the said converter by respectively the output samples of the first delaying circuit group and a second multiplying circuit group of n multiplying circuits for multiplying the samples provided by the last delaying circuit of the first delaying circuit group by respectively the output samples of the second delaying circuit group ;

subtractor means for respectively subtracting the sample products provided by the second multiplying circuit group from the sample products provided by the first multiplying circuit group ;

integrator means for integrating the sample differences provided by said subtractor means, the signals provided by said integrator means deing the coefficients of the autocorrelation function of the input signal ;

means for selecting at least one of said coefficients ; and

comparator means for comparing the said coefficient to a predetermined threshold, the said comparator means delivering an output signal when the input signal contains a periodic component.

2 - Apparatus according to claim 1 wherein the selecting means selects several coefficients of the autocorrelation function and the comparator means compares the predetermined threshold to the sum of said several coefficients.

3 - Apparatus according to claim 1 wherein the samples provided by the said converter are samples of one bit, the multiplying circuits of the first and second multiplying circuit groups are exclusive OR gates and the subtractor means and the integrator means are direct and reverse counters driven by a clock pulse generator and controlled by the OR gates acting as subtractor means.

## Revendications

1. Appareil pour détecter l'instant d'apparition et déterminer la fréquence d'un signal périodique noyé dans un bruit, comportant un moyen pour calculer en temps réel la fonction d'autocorrélation de ce signal et déduire sa fréquence de la valeur des coefficients de la fonction d'autocorrélation, ledit appareil comprenant:

un convertisseur analogique numérique transformant périodiquement le signal en échantillons de q bits ;

un moyen pour retarder lesdits échantillons d'un intervalle de temps prédéterminé $\Delta t$ et de multiples de celui-ci, ledit moyen pour retarder incluant un premier groupe de circuits de retard à n circuits de retard pour retarder lesdits échantillons de $\Delta t$, $2\Delta t$...

$n\Delta t$ et un second groupe de circuits de retard à n circuits de retard pour retarder lesdits échantillons de $(n+1)\Delta t$, $(n+2)\Delta t$, ..., $2n\Delta t$ ;

un moyen multiplieur incluant un premier groupe de circuits multiplieurs à n circuits multiplieurs pour multiplier les échantillons fournis par ledit convertisseur respectivement par des échantillons de sortie du premier groupe de circuits multiplieurs et un second groupe de circuits multiplieurs à n circuits multiplieurs pour multiplier les échantillons fournis par le dernier circuit de retard du premier groupe de circuits de retard respectivement par les échantillons de sortie du second groupe de circuits de retard;

un moyen soustracteur pour respectivement soustraire les produits d'échantillon fournis par le second groupe de circuits multiplieurs, des produits d'échantillon fournis par le premier groupe de circuits multiplieurs; un moyen intégrateur pour intégrer les différences; d'échantillon fournies par ledit moyen soustracteur, les signaux fournis par ledit moyen intégrateur étant les coefficients de la fonction d'autocorrélation du signal d'entrée;

un moyen pour sélectionner au moins l'un desdits coefficients; et

un moyen comparateur pour comparer ledit coefficient à un seuil prédéterminé, ledit moyen comparateur délivrant un signal de sortie lorsque le signal d'entrée contient un composant périodique.

2. Appareil conforme à la revendication 1 dans lequel le moyen pour sélectionner sélectionne plusieurs coefficients de la fonction d'autocorrélation et le moyen comparateur compare le seuil prédéterminée à la somme desdits plusieurs coefficients.

3. Appareil conforme à la revendication 1 dans lequel les échantillons fournis par ledit convertisseur sont des échantillons d'un bit, les circuits multiplieurs dans les premier et second groupes de circuits multiplieurs sont des portes OU exclusif et le moyen soustracteur et le moyen intégrateur sont des compteurs-décompteurs pilotés par un générateur d'impulsions d'horloge et commandés par des portes OU agissant comme moyen soustracteur.

**Patentansprüche**

1. Vorrichtung zur Erkennung des Zeitpunkts des Auftretens und zur Bestimmung der Frequenz eines in Rauschen eingebetteten periodischen Signals mit Echtzeit-Einrichtungen zur Berechnung der Autokorrelationsfunktion dieses Signals und zur Ableitung seiner Frequenz aus dem Wert der Koeffizienten der Autokorrelationsfunktion, wobei die Vorrichtung aufweist:

einen Analog-Digital-Wandler, der das Signal periodisch in Muster aus q bits umwandelt;

eine Einrichtung zur Verzögerung dieser Muster um ein vorgegebenes Zeitintervall $\Delta t$ und Vielfache davon, wobei diese Verzögerungseinrichtung eine erste Verzögerergruppe aus n Verzögerungsschaltungen zur Verzögerung der Muster um $\Delta t$, $2\Delta t$ ... $n\Delta t$ und eine zweite Verzögerergruppe aus n Verzögerungsschaltungen zur Verzögerung der Muster um $(n+1) \Delta t$, $(n+2) \Delta t$, ... $2n\Delta t$ enthält;

eine Multiplikationseinrichtung mit einer ersten Multiplizierergruppe aus n Multiplizierern zur Multiplikation der vom Wandler bereitgestellten Muster mit jeweils den Ausgangsmustern der ersten Verzögerergruppe und mit einer zweiten Multiplizierergruppe aus n Multiplizierern zur Multiplikation der von der letzten Verzögerungsschaltung der ersten Verzögerergruppe bereitgestellten Muster mit jeweils den Ausgangsmustern der zweiten Verzögerergruppe;

eine Subtraktionseinrichtung zur Subtraktion jeweils der von der zweiten Multiplizierergruppe bereitgestellten Muster von den von der ersten Multiplizierergruppe bereitgestellten Mustern;

eine Integrationseinrichtung zur Integration der Differenzen der Muster, die von der Subtraktionseinrichtung bereitgestellt werden, wobei die Signale, die von der Integrationseinrichtung erzeugt werden, die Koeffizienten der Autokorrelationsfunktion des Eingangssignal sind;

eine Einrichtung zur Auswahl mindestens eines dieser Koeffizienten; und

eine Komparatoreinrichtung zum Vergleich dieses Koeffizienten einer vorgebenen Schwelle, wobei diese Komparatoreinrichtung ein Ausgangssignal abgibt, wenn das Eingangssignal eine periodische Komponente aufweist.

2. Vorrichtung nach Anspruch 1, wobei die Auswahleinrichtung mehrere Koeffizienten der Autokorrelationsfunktion auswählt und die Komparatoreinrichtung die vorgegebene Schwelle mit der Summe dieser Koeffizienten vergleicht.

3. Vorrichtung nach Anspruch 1, wobei die durch den Wandler erzeugten Muster I-bit-Muster sind, die Multiplizierer der ersten und zweiten Multiplizierergruppe exklusive ODER-Gatter und die Subtraktionseinrichtung und die Integrationseinrichtung Vorwärts- und Rückwärtszähler sind, die mit einem Taktgenerator betrieben und durch die ODER-Gatter, die als Subtraktionseinrichtung fungieren, gesteuert sind.

# FIG.1

Particle

laser
source

Test volume

PHOTOMULTIPLIER
7

SIGNAL
PROCESSOR
UNIT

100

EP 0 268 519 B1

# FIG.2

Particle passage across the test volume

s(t)

noise

$s(t) = 0$

$t < t_O$

$2\sigma_M$

101  102  ~103  104

$t_O$

T

T = integration duration of the sliding autocorrelation function

Past     Future

Instant initial

EP 0 268 519 B1

# FIG.3

Clock

Length of the treated sample

SHIFT REGISTER
(q bits - 2n stages·

signal → CAN q bits

10

$x_i$ $11_1$ $x_{i-1}$ $11_2$ — — — $11_n$ $11_{n+1}$ — — — — $11_{2n}$ $x_{i-2n}$

$x_{i-n}$

MULTIPLIEURS
(q bits x q bits)

12

$12_1$ $12_2$ $12_n$ $12_{n+1}$ $12_{2n}$

SUBTRACTORS
13

$13_1$ $13_2$ $13_n$

$13_2$ 130

DIGITAL INTEGRATORS
14

$14_1$ $14_2$ $14_3$ $14_n$

INTEGRATION STORES

140

Threshold

15

COMPARATOR

memorizing

16

Time

$c_1$ $c_2$ $c_3$ — — — $c_n$

BUFFER STORE

→ treatment

EP 0 268 519 B1

FIG.4

# FIG.5

# FIG. 8

# FIG.6

$Cos(2.\pi.f_1.k.\Delta t)$
$k=1$ à $n$

$Cos\left[2\pi(f_1+\Delta f)k\Delta t\right]$
$k=1$ à $n$

$Cos\left[2\pi(f_1+2\Delta f)k\Delta t\right]$
$k=1$ à $n$

21

$Cos\left[2\pi(f_2-\Delta f)k\Delta t\right]$
$k=1$ à $n$

$Cos\left[2\pi.f_2.k.\Delta t\right]$
$k=1$ à $n$

Sub - stores
(n values'

Selected zones
framing $f_0$

initialization

$f_0=\dfrac{1}{2\tau_0}$

16

C(1)

C(n)

address

ADDRESS SELECTION LOGIC

22

address

n values
(correlation
coefficients)

Data

MULTIPLIEUR

23

X

Data

Σ

DIGITAL INTEGRATORS

24

25

MAXIMUM SEARCH ALGORITHM

26

EP 0 268 519 B1

# FIG.7

SHIFT REGISTER

Signal

10
CAM
q bits

110₁

$11_1$   $11_2$  ———  $11_n$   $11_{n+1}$  ———  $11_{2n}$

11

$110_{n+1}$

q bits

MSB

1 bit

MSB

30₁

A B
S a b

A B
S a b

A B
S a b

A B
S a b

A B
S a b    30n

PROGRAMMABLE
ADDERS
SUBTRACTORS

| a | b | S |
|---|---|-----|
| 0 | 0 | A – B |
| 0 | 1 | A + B |
| 1 | 0 | –A – B |
| 1 | 1 | –1 + B |

14₁

Σ   Σ   Σ   Σ   Σ   14n

DIGITAL INTEGRATORS
WITH INTEGRATION
STORES

$c_1$   $c_2$   $c_3$   ———   $c_n$

EP 0 268 519 B1

# FIG.9a

base module (n=4)

} outputs

# FIG.9 b

one circuit wiring (n=4)

input

# FIG.9c

serial connection
of two circuits (n=8)

input